# EUROPÄISCHE PATENTSCHRIFT

(11) **EP 1 740 051 B1**
(45) Veröffentlichungstag und Bekanntmachung des Hinweises auf die Patenterteilung: **14.01.2009**
(21) Anmeldenummer: 05716021.0
(22) Anmeldetag: 12.03.2005
(51) Int. Cl.: A01N 47/36

(54) **VERWENDUNG VON SULFONYLHARNSTOFFEN**
USE OF SULFONYLUREAS
UTILISATION DE SULFONYLURÉS

(30) Priorität: 27.03.2004 DE 102004015140; 30.06.2004 DE 102004031346
(43) Veröffentlichungstag der Anmeldung: 10.01.2007
(60) Teilanmeldung: 08010754.3
(73) Patentinhaber: Bayer CropScience AG, 40789 Monheim (DE)
(72) Erfinder: HILLS, Martin, 65510 Idstein (DE); KRÄHMER, Hansjörg, 65719 Hofheim (DE); DIETRICH, Hansjörg, 65719 Hofheim (DE); WALDRAFF, Christian, 61118 Bad Vilbel (DE); FEUCHT, Dieter, 65760 Eschborn (DE); MÜLLER, Klaus-Helmut, 40593 Düsseldorf (DE); PHILIPP, Ulrich, Lees Sumit, MO 64064 (US)
(86) Internationale Anmeldenummer: PCT/EP2005/002673
(87) Internationale Veröffentlichungsnummer: WO 2005/092104

(56) Entgegenhaltungen:
- EP-A- 0 645 386

## Beschreibung

Die Erfindung betrifft die Verwendung von speziellen Sulfonylharnstoffen zur selektiven Bekämpfung von unerwünschtem Pflanzenwachstum in Leguminosen.

Es ist bekannt, daß bestimmte N-Azinyl-N'-arylsulfonylharnstoffe mit einfachen offenkettigen Hydroxamsäureester-Gruppen im Arylteil, wie z.B. N-(4,6-Dimethylpyrimidin-2-yl)-N'-(2-methoxyaminocarbonyl-phenylsulfonyl)-hamstoff und der entsprechende -N'-(2-n-octyloxyaminocarbonylphenylsulfonyl)-harnstoff herbizide Eigenschaften aufweisen (vgl. DE-A-3 516 435, EP-A-173 958, US-4 704 158). Die Herbizidwirkung dieser bekannten Verbindungen ist jedoch nicht in allen Belangen zufriedenstellend.

Weiterhin sind auch bestimmte herbizid wirksame N-Azinyl-N'-(het)arylsulfonylhamstoffe bekannt, welche im (Het)arylteil durch O,O-dialkylierte, ebenfalls offenkettige Hydroxamsäure-Gruppen (vgl. EP-A-301 784) oder durch cyclisches Dioxazin (vgl. US 5,476,936) substituiert sind.

Die Aufgabe der vorliegenden Erfindung bestand in einer verbesserten Bekämpfung von unerwünschtem Pflanzenwuchs z.B. auch in Kulturpflanzen. Überraschend wurde gefunden, dass sich spezielle Verbindungen der Formel (I) und deren Salze als agrochemische Wirkstoffe zur verbesserten, insbesondere zur selektiven Bekämpfung von unerwünschtem Pflanzenwuchs in Leguminosen eignen.

Die vorliegende Erfindung betrifft somit die Verwendung von Verbindungen der allgemeinen Formel (I) und deren Salzen zur selektiven Bekämpfung von unerwünschtem Pflanzenwuchs in Leguminosen 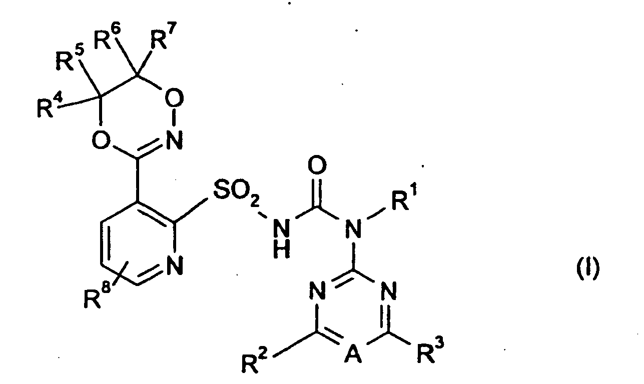 worin
- A: für Stickstoff oder eine CR¹¹-Gruppierung steht,
wobei
R¹¹ für Wasserstoff, Alkyl, Halogen und Haloalkyl steht,
- R¹: für Wasserstoff oder einen gegebenenfalls substituierten Rest aus der Reihe Alkyl, Alkoxy, Alkoxyalkyl, Alkenyl, Alkinyl, Cycloalkyl, Cycloalkylalkyl, Aralkyl und Aryl steht,
- R²: für Wasserstoff, Halogen oder für jeweils gegebenenfalls durch Halogen substituiertes Alkyl, Alkoxy, Alkylthio, Alkylamino oder Dialkylamino mit jeweils 1 bis 6 Kohlenstoffatomen steht,
- R³: für Wasserstoff, Halogen oder für jeweils gegebenenfalls durch Halogen substituiertes Alkyl, Alkoxy, Alkylthio, Alkylamino oder Dialkylamino mit jeweils 1 bis 6 Kohlenstoffatomen steht,
- R⁴ - R⁷: unabhängig voneinander für Wasserstoff, Halogen, Cyano, Thiocyanato oder für jeweils gegebenenfalls durch Halogen substituiertes Alkyl, Alkoxy, Alkylthio, Alkylsulfinyl, Alkylsulfonyl, Alkylamino, Alkylcarbonyl, Alkoxycarbonyl, Alkylaminocarbonyl mit jeweils 1 bis 3 Kohlenstoffatomen stehen,
- R⁸: für Wasserstoff, Halogen, Cyano, Thiocyanato oder für jeweils gegebenenfalls durch Halogen substituiertes Alkyl, Alkoxy, Alkylthio, Alkylsulfinyl, Alkylsulfonyl, Alkylamino, Alkylcarbonyl, Alkoxycarbonyl, Alkylaminocarbonyl mit jeweils 1 bis 3 Kohlenstoffatomen steht,
wobei in den vorgenannten Resten die Alkyl- und Alkylengruppen jeweils 1 bis 6 C-Atome, die Alkenyl- und Alkinylgruppen jeweils 2 bis 6 C-Atome, die Cycloalkylgruppen jeweils 3 bis 6 C-Atome und die Arylgruppen jeweils 6 bzw. 10 C-Atome enthalten können.

Die Verbindungen der Formel (I) und deren Salze sind bekannt, ebenso wie deren Herstellung, z.B. aus US 5,476,936 die hiermit in die vorliegende Beschreibung aufgenommen wird.

Gegenstand der Erfindung ist vorzugsweise die Verwendung von Verbindungen der Formel (I) und deren Salzen,
worin
- A: für Stickstoff oder eine CH-Gruppierung steht,
- R¹: für Wasserstoff oder einen gegebenenfalls durch Halogen substituierten Rest aus der Reihe Alkyl, Alkoxy, Alkoxyalkyl, Alkenyl und Alkinyl mit jeweils bis zu 3 Kohlenstoffatomen steht,
- R²: für Wasserstoff, Halogen oder für jeweils gegebenenfalls durch Halogen substituiertes Alkyl, Alkoxy, Alkylthio, Alkylamino oder Dialkylamino mit jeweils 1 bis 3 Kohlenstoffatomen in den Alkylresten steht,
- R³: für Wasserstoff, Halogen oder für jeweils gegebenenfalls durch Halogen substituiertes Alkyl, Alkoxy, Alkylthio, Alkylamino oder Dialkylamino mit jeweils 1 bis 3 Kohlenstoffatomen in den Alkylresten steht,
- R⁴ - R⁷: unabhängig voneinander für Wasserstoff, Halogen, Cyano, Thiocyanato oder für jeweils gegebenenfalls durch Halogen substituiertes Alkyl, Alkoxy, Alkylthio, Alkylsulfinyl, Alkylsulfonyl, Alkylamino, Alkylcarbonyl, Alkoxycarbonyl oder Alkylaminocarbonyl mit jeweils 1 bis 3 Kohlenstoffatomen in den Alkylresten steht,
- R⁸: für Wasserstoff, Halogen, Cyano, Thiocyanato oder für jeweils gegebenenfalls durch Halogen substituiertes Alkyl, Alkoxy, Alkylthio, Alkylsulfinyl, Alkylsulfonyl, Alkylamino, Alkylcarbonyl, Alkoxycarbonyl oder Alkylaminocarbonyl mit jeweils 1 bis 3 Kohlenstoffatomen in den Alkylresten steht.

Die Erfindung betrifft weiter vorzugsweise die Verwendung von Salzen, die man aus Verbindungen der Formel (I) und Basen, wie z.B. Natrium-, Kalium- oder Calciumhydroxid, -hydrid, -amid und -carbonat, Natrium- oder Kalium-C₁-C₄-alkanolaten, Ammoniak, C₁-C₄-Alkylaminen, Di-(C₁-C₄-alkyl)-aminen oder Tri-(C₁-C₄-alkyl)-aminen, nach üblichen Verfahren erhält.

Die Erfindung betrifft insbesondere die Verwendung von Verbindungen der Formel (I) und deren Salzen,
worin
- A: für Stickstoff oder eine CH-Gruppierung steht,
- R¹: für Wasserstoff, Methyl, Ethyl, Methoxy, Methoxymethyl oder Ethoxy steht,
- R²: für Wasserstoff, Chlor, Methyl, Ethyl, Trifluoromethyl, Methoxy, Ethoxy, Difluoromethoxy, Methylthio, Methylamino oder Dimethylamino steht,
- R³: für Wasserstoff, Chlor, Methyl, Ethyl, Trifluoromethyl, Methoxy, Ethoxy, Difluoromethoxy, Methylthio, Methylamino oder Dimethylamino steht,
- R⁴ - R⁷: unabhängig voneinander für Wasserstoff, Fluor, Chlor, Cyano, oder für jeweils gegebenenfalls durch Chlor oder Fluor substituiertes Methyl, Methylthio, Methylsulfinyl, Methylsulfonyl, Methoxycarbonyl und Ethoxycarbonyl steht, vorzugsweise für Wasserstoff,
- R⁸: für Wasserstoff, Fluor, Chlor, Brom, Cyano oder für jeweils gegebenenfalls durch Chlor oder Fluor substituiertes Methyl, Methoxy, Ethoxy, Methylthio, Ethylthio, Methylsulfinyl, Ethylsulfinyl, Methylsulfonyl, Ethylsulfonyl, Methyl- oder Dimethylamino steht, vorzugsweise für Wasserstoff.

Die Erfindung betrifft besonders bevorzugt die Verwendung von Verbindungen der Formel (I) und deren Salzen, insbesondere deren Alkalimetallsalzen,
worin
- A: für Stickstoff steht,
- R¹: für Wasserstoff oder Methyl steht,
- R²: für Wasserstoff, Chlor, Methyl, Ethyl, Trifluoromethyl, Methoxy, Ethoxy, Difluoromethoxy, Methylthio, Methylamino oder Dimethylamino steht,
- R³: für Wasserstoff, Chlor, Methyl, Ethyl, Trifluoromethyl, Methoxy, Ethoxy, Difluoromethoxy, Methylthio, Methylamino oder Dimethylamino steht,
- R⁴- R⁷: für Wasserstoff steht,
- R⁸: für Wasserstoff steht.

Die Erfindung betrifft ebenfalls besonders bevorzugt die Verwendung von Verbindungen der Formel (I) und deren Salzen, insbesondere deren Alkalimetallsalzen,
worin
- A: für eine CH-Gruppierung steht,
- R¹: für Wasserstoff oder Methyl steht,
- R²: für Wasserstoff, Chlor, Methyl, Ethyl, Trifluoromethyl, Methoxy, Ethoxy, Difluoromethoxy, Methylthio, Methylamino oder Dimethylamino steht,
- R³: für Wasserstoff, Chlor, Methyl, Ethyl, Trifluoromethyl, Methoxy, Ethoxy, Difluoromethoxy, Methylthio, Methylamino oder Dimethylamino steht,
- R⁴ - R⁷: für Wasserstoff steht,
- R⁸: für Wasserstoff steht.

Die oben aufgeführten allgemeinen oder in Vorzugsbereichen aufgeführten Restedefinitionen können untereinander, also auch zwischen den angegebenen bevorzugten Bereichen beliebig kombiniert werden.

Die bei den Restedefinitionen genannten Kohlenwasserstoffreste, wie Alkyl, Alkenyl oder Alkinyl, auch in Kombinationen mit Heteroatomen, wie in Alkoxy, Alkylthio, Haloalkyl oder Alkylamino, sind auch dann, wenn dies nicht ausdrücklich angegeben ist, geradkettig oder verzweigt

Aus den Verbindungen der allgemeinen Formel (I) können gegebenenfalls Salze hergestellt werden, z.B. Metallsalze wie Alkali (z.B. Na, K) -Salze oder Erdalkali (z.B.

Ca, Mg) -Salze oder Ammonium- oder Aminsalze. Man erhält solche Salze in einfacher Weise nach üblichen Salzbildungsmethoden, beispielsweise durch Lösen oder Dispergieren einer Verbindung der Formel (I) in einem geeigneten Verdünnungsmittel, wie z.B. Methylenchlorid, Aceton, tert.-Butyl-methylether oder Toluol, und Zugabe einer geeigneten Base. Die Salze können dann - gegebenenfalls nach längerem Rühren - durch Einengen oder Absaugen isoliert werden.

Erfingdungsgemäß bevorzugt verwendete Wirkstoffe sind in der nachfolgenden Tabelle genannt, worin folgende Abkürzungen verwendet werden:
Smp.: = Schmelzpunkt
(+) = Der angegebene Schmelzpunkt (Smp.) bezieht sich jeweils auf das entsprechende Natriumsalz, d.h. die entsprechende Verbindung, worin der Wasserstoff der -SO₂NH-Gruppe durch Natrium ersetzt ist.

**Tabelle 1: Beispiele für Verbindungen der Formel (I) mit R⁴ = R⁵ = R⁶= R⁷ = R⁸= H:**

| Bsp.- Nr. | R¹ | A | R² | R³ | Smp. (°C) |
|---|---|---|---|---|---|
| I-1 | H | CH | OCH₃ | OC₂H₅ | 154 |
| I-2 | H | CH | OCH₃ | CH₃ | |
| I-3 | H | CH | OHC₃ | CH₃ | 180-181⁽⁺⁾ |
| I-4 | H | CH | OCH₃ | C₂H₅ | |
| I-5 | H | CH | OCH₃ | CF₃ | |
| I-6 | H | CH | OCH₃ | OCF₂H | |
| I-7 | H | CH | OCH₃ | NHCH₃ | |
| I-8 | H | CH | OCH₃ | N(CH₃)₂ | 199.5 |
| I-9 | H | CH | OCH₃ | Cl | 110-111 |
| I-10 | H | CH | OCH₃ | Cl | 175-178⁽⁺⁾ |
| I-11 | H | CH | OCH₃ | OCH₃ | 167-168 |
| I-12 | H | CH | OCH₃ | OCH₃ | 171-172⁽⁺⁾ |
| I-13 | H | CH | OC₂H₅ | OC₂H₅ | |
| I-14 | H | CH | OC₂H₅ | OC₂H₅ | 152-154⁽⁺⁾ |
| I-15 | H | CH | OC₂H₅ | CH₃ | |
| I-16 | H | CH | OC₂H₅ | C₂H₅ | |
| I-17 | H | CH | OC₂H₅ | CF₃ | |
| I-18 | H | CH | OC₂H₅ | OCF₂H | |
| I-19 | H | CH | OC₂H₅ | NHCH₃ | |
| I-20 | H | CH | OC₂H₅ | N(CH₃)₂ | |
| I-21 | H | CH | OC₂H₅ | Cl | 158-159 |
| I-22 | H | CH | OC₂H₅ | Cl | 213⁽⁺⁾ |
| I-23 | H | CH | CH₃ | CH₃ | 153 |
| I-24 | H | CH | CH₃ | C₂H₅ | |
| I-25 | H | CH | CH₃ | CF₃ | |
| I-26 | H | CH | CH₃ | OCF₂H | |
| I-27 | H | CH | CH₃ | NHCH₃ | |
| I-28 | H | CH | CH₃ | N(CH₃)₂ | |
| I-29 | H | CH | CH₃ | Cl | 108-109 |
| I-30 | H | CH | CH₃ | Cl | >300⁽⁺⁾ |
| I-31 | H | CH | C₂H₅ | C₂H₅ | |
| I-32 | H | CH | C₂H₅ | CF₃ | |
| I-33 | H | CH | C₂H₅ | OCF₂H | |
| I-34 | H | CH | C₂H₅ | NHCH₃ | |
| I-35 | H | CH | C₂H₅ | Cl | |
| I-36 | H | CH | CF₃ | CF₃ | |
| I-37 | H | CH | CF₃ | OCF₂H | |
| I-38 | H | CH | CF₃ | NHCH₃ | |
| I-39 | H | CH | CF₃ | N(CH₃)₂ | |
| I-40 | H | CH | CF₃ | Cl | |
| I-41 | H | CH | OCF₂H | OCF₂H | |
| I-42 | H | CH | OCF₂H | NHCH₃ | |
| I-43 | H | CH | OCF₂H | N(CH₃)₂ | |
| I-44 | H | CH | OCF₂H | Cl | |
| I-45 | H | CH | NHCH₃ | NHCH₃ | |
| I-46 | H | CH | NHCH₃ | N(CH₃)₂ | |
| I-47 | H | CH | NHCH₃ | Cl | |
| I-48 | H | CH | N(CH₃)₂ | N(CH₃)₂ | |
| I-49 | H | CH | N(CH₃)₂ | Cl | |
| I-50 | H | CH | Cl | Cl | |
| I-51 | H | N | OCH₃ | OCH₃ | 255 |
| I-52 | H | N | OCH₃ | OCH₃ | 159-162⁽⁺⁾ |
| I-53 | H | N | OCH₃ | OC₂H₅ | |
| I-54 | H | N | OCH₃ | CH₃ | |
| I-55 | H | N | OCH₃ | C₂H₅ | |
| I-56 | H | N | OCH₃ | CF₃ | |
| I-57 | H | N | OCH₃ | OCF₂H | |
| I-58 | H | N | OCH₃ | NHCH₃ | |
| I-59 | H | N | OCH₃ | N(CH₃)₂ | |
| I-60 | H | N | OCH₃ | N(CH₃)₂ | 156⁽⁺⁾ |
| I-61 | H | N | OCH₃ | Cl | |
| I-62 | H | N | OC₂H₅ | OC₂H₅ | |
| I-63 | H | N | OC₂H₅ | CH₃ | |
| I-64 | H | N | OC₂H₅ | C₂H₅ | |
| I-65 | H | N | OC₂H₅ | CF₃ | |
| I-66 | H | N | OC₂H₅ | OCF₂H | |
| I-67 | H | N | OC₂H₅ | NHCH₃ | |
| I-68 | H | N | OC₂H₅ | N(CH₃)₂ | |
| I-69 | H | N | OC₂H₅ | Cl | |
| I-70 | H | N | OC₂H₅ | Cl | 213⁽⁺⁾ |
| I-71 | H | N | CH₃ | CH₃ | |
| I-72 | H | N | CH₃ | C₂H₅ | |
| I-73 | H | N | CH₃ | CF₃ | |
| I-74 | H | N | CH₃ | OCF₂H | |
| I-75 | H | N | CH₃ | NHCH₃ | |
| I-76 | H | N | CH₃ | N(CH₃)₂ | |
| I-77 | H | N | CH₃ | Cl | |
| I-78 | H | N | C₂H₅ | C₂H₅ | |
| I-79 | H | N | C₂H₅ | CF₃ | |
| I-80 | H | N | C₂H₅ | OCF₂H | |
| I-81 | H | N | C₂H₅ | NHCH₃ | |
| I-82 | H | N | C₂H₅ | Cl | |
| I-83 | H | N | CF₃ | CF₃ | |
| I-84 | H | N | CF₃ | OCF₂H | |
| I-85 | H | N | CF₃ | NHCH₃ | |
| I-86 | H | N | CF₃ | N(CH₃)₂ | |
| I-87 | H | N | CF₃ | Cl | |
| I-88 | H | N | OCF₂H | OCF₂H | |
| I-89 | H | N | OCF₂H | NHCH₃ | |
| I-90 | H | N | OCF₂H | N(CH₃)₂ | |
| I-91 | H | N | OCF₂H | Cl | |
| I-92 | H | N | NHCH₃ | NHCH₃ | |
| I-93 | H | N | NHCH₃ | N(CH₃)₂ | |
| I-94 | H | N | NHCH₃ | Cl | |
| I-95 | H | N | N(CH₃)₂ | N(CH₃)₂ | |
| I-96 | H | N | N(CH₃)₂ | Cl | |
| I-97 | H | N | Cl | Cl | |
| I-98 | CH₃ | N | OCH₃ | OCH₃ | |
| I-99 | CH₃ | N | OCH₃ | OC₂H₅ | |
| I-100 | CH₃ | N | OCH₃ | CH₃ | |
| I-101 | CH₃ | N | OCH₃ | C₂H₅ | |
| I-102 | CH₃ | N | OCH₃ | CF₃ | |
| I-103 | CH₃ | N | OCH₃ | OCF₂H | |
| I-104 | CH₃ | N | OCH₃ | NHCH₃ | |
| I-105 | CH₃ | N | OCH₃ | N(CH₃)₂ | |
| I-106 | CH₃ | N | OCH₃ | Cl | |
| I-107 | CH₃ | N | OC₂H₅ | OC₂H₅ | |
| I-108 | CH₃ | N | OC₂H₅ | CH₃ | |
| I-109 | CH₃ | N | OC₂H₅ | C₂H₅ | |
| I-110 | CH₃ | N | OC₂H₅ | CF₃ | |
| I-111 | CH₃ | N | OC₂H₅ | OCF₂H | |
| I-112 | CH₃ | N | OC₂H₅ | NHCH₃ | |
| I-113 | CH₃ | N | OC₂H₅ | N(CH₃)₂ | |
| I-114 | CH₃ | N | OC₂H₅ | Cl | |
| I-115 | CH₃ | N | CH₃ | CH₃ | |
| I-116 | CH₃ | N | CH₃ | C₂H₅ | |
| I-117 | CH₃ | N | CH₃ | CF₃ | |
| I-118 | CH₃ | N | CH₃ | OCF₂H | |
| I-119 | CH₃ | N | CH₃ | NHCH₃ | |
| I-120 | CH₃ | N | CH₃ | N(CH₃)₂ | |
| I-121 | CH₃ | N | CH₃ | Cl | |
| I-122 | CH₃ | N | C₂H₅ | C₂H₅ | |
| I-123 | CH₃ | N | C₂H₅ | CF₃ | |
| I-124 | CH₃ | N | C₂H₅ | OCF₂H | |
| I-125 | CH₃ | N | C₂H₅ | NHCH₃ | |
| I-126 | CH₃ | N | C₂H₅ | Cl | |
| I-127 | CH₃ | N | CF₃ | CF₃ | |
| I-128 | CH₃ | N | CF₃ | OCF₂H | |
| I-129 | CH₃ | N | CF₃ | NHCH₃ | |
| I-130 | CH₃ | N | CF₃ | N(CH₃)₂ | |
| I-131 | CH₃ | N | CF₃ | Cl | |
| I-132 | CH₃ | N | OCF₂H | OCF₂H | |
| I-133 | CH₃ | N | OCF₂H | NHCH₃ | |
| I-134 | CH₃ | N | OCF₂H | N(CH₃)₂ | |
| I-135 | CH₃ | N | OCF₂H | Cl | |
| I-136 | CH₃ | N | NHCH₃ | NHCH₃ | |
| I-137 | CH₃ | N | NHCH₃ | N(CH₃)₂ | |
| I-138 | CH₃ | N | NHCH₃ | Cl | |
| I-139 | CH₃ | N | N(CH₃)₂ | N(CH₃)₂ | |
| I-140 | CH₃ | N | N(CH₃)₂ | Cl | |
| I-141 | CH₃ | N | Cl | Cl | |
| I-142 | H | N | N(CH₃)₂ | OCH₂CF₃ | 158 |
| I-143 | H | CH | Cl | OCH₂CF₃ | 204-205 |
| I-144 | H | CH | Cl | OCH₂CF₃ | |
| I-145 | H | CH | Cl | OCH₂CF₃ | 207⁽⁺⁾ |

Die Verbindungen der Formel (1) und deren Salze können zur Bekämpfung von unerwünschtem Pflanzenwuchs verwendet werden. Unter unerwünschten Pflanzen sind alle Pflanzen zu verstehen, die an Orten wachsen, wo sie unerwünscht sind. Dies können z.B. Schadpflanzen (z.B. Unkräuter oder unerwünschte Kulturpflanzen) sein, z.B. auch solche, die gegen bestimmte herbizide Wirkstoffe wie Glyphosate, Atrazin, Glufosinate oder Imidazolinon-Herbizide resistent sind. Die Verbindungen der Formel (I) können z.B. gegen folgende Pflanzen verwendet werden:

Monokotyle Unkräuter, z.B. der Gattungen Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Sphenoclea, Dactyloctenium, Agrostis, Alopecurus, Apera.

Dikotyle Unkräuter, z.B. der Gattungen Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea, Trifolium, Ranunculus, Taraxacum, Euphorbia.

Monokotyle Kulturpflanzen, z.B. monokotyle transgene und nicht transgene Kulturpflanzen, z.B. der Gattungen Oryza, Zea, Triticum, Hordeum, Avena, Secale, Sorghum, Panicum, Saccharum, Ananas, Asparagus, Allium.

Dikotyle Kulturpflanzen, z.B. der Gattungen Gossypium, Beta, Solanum, Nicotiana, Lycopersicon, Brassica, Lactuca, Cucumis, Cucurbita.

Die Verwendung der Verbindungen der Formel (I) und deren Salze ist jedoch keineswegs auf diese Gattungen beschränkt, sondern erstreckt sich in gleicher Weise auch auf andere, von Leguminosen verschiedene Pflanzen.

Die Verbindungen der Formel (I) und deren Salze weisen eine ausgezeichnete Selektivität in Kulturen von Leguminosen auf. Sie eignen sich z.B. zur selektiven Bekämpfung von unerwünschtem Pflanzenwuchs, z.B. von Schadpflanzen (z.B. monokotylen und dikotylen Unkräutern oder unerwünschten Kulturpflanzen), in Kulturen von transgenen und nicht-transgenen Leguminosen, insbesondere der Gattung Glycine, beispielsweise im Vorsaat-Verfahren, Vorauflauf-Verfahren oder im Nachauflauf-Verfahren.

Als Leguminosen kommen z.B. transgene und nicht-transgene Leguminosen z.B. der Gattungen Glycine, Phaseolus, Pisum, Vicia und Arachis in Frage. Bevorzugt kommen Leguminosen der Gattung Glycine in Frage, z.B. der Art Glycine max. (Soja) wie nicht-transgene Glycine max. (z.B. konventionelle Sorten wie STS-Sorten) oder transgene Glycine max. (z.B. RR-Soja oder LL-Soja) und deren Kreuzungen.

Die Verbindungen der Formel (I) und deren Salze können in übliche Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen. Die Formulierungen können die üblichen Hilfs- und Zusatzstoffe enthalten.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel könne z.B. auch organische Lösungsmittel als Hilfslösungsmittel verwendet werden. Als flüssige Lösungsmittel kommen im wesentlichen infrage: Aromaten, wie Xylol, Toluol, Alkylnaphthaline, chlorierte Aromaten oder chlorierte aliphatische Kohlenwasserstoffe, wie Chlorbenzole, Chlorethylene, oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone, wie Aceton, Methylethylketon, Methylisobutylketon oder Cyclohexanon, stark polare Lösungsmittel, wie Dimethylformamid oder Dimethylsulfoxid, sowie Wasser.

Als feste Trägerstoffe kommen in Frage: z.B. Ammoniumsalze und natürliche Gesteinsmehle, wie Kaoline, Tonerden, Talkum, Kreide, Quartz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen infrage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel kommen infrage: z.B. nicht ionogene und anionische Emulgatoren, wie Polyoxyethylen-Fettsäureester, Polyoxyethylen-Fettalkohol-Ether, z.B. Alkylarylpolyglykolether, Alkylsulfonate, Alkylsulfate, Arylsulfonate sowie Eiweißhydrolysate; als Dispergiermittel kommen infrage: z.B. Ligninsulfitablaugen und Methylcellulose.

Es können in den Formulierungen Haftmittel wie Carboxymethylcellulose, natürliche und synthetische, pulverige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die Wirkstoffe der Formel (I) und deren Salze können als solche oder in ihren Formulierungen auch in Mischung mit anderen agrochemischen Wirkstoffen wie bekannten Herbiziden zur Bekämpfung von unerwünschtem Pflanzenwuchs, z.B. zur Unkrautbekämpfung oder zur Bekämpfung von unerwünschten Kulturpflanzen Verwendung finden, wobei z.B. Fertigformulierungen oder Tankmischungen möglich sind.
Als Kombinationspartner für die Wirkstoffe der Formel (I) und deren Salze, z.B. in Mischungsformulierungen oder im Tank-Mix, sind beispielsweise bekannte agrochemische Wirkstoffe einsetzbar, wie sie in z.B. Weed Research 26, 441-445 (1986), oder "The Pesticide Manual", 13th edition, The British Crop Protection Council, 2003, und dort zitierter Literatur beschrieben sind. Als literaturbekannte Herbizide, die mit den Wirkstoffen der Formel (I) und deren Salzen kombiniert werden können, sind z.B. folgende Wirkstoffe zu nennen (Anmerkung: Die Verbindungen dabei sind entweder mit dem "common name" nach der International Organization for Standardization (ISO) oder mit dem chemischen Namen, ggf. zusammen mit einer üblichen Codenummer bezeichnet und umfassen stets sämtliche Anwendungsformen wie Säuren, Salze, Ester und Isomere wie Stereoisomere und optische Isomere. Dabei sind eine und zum Teil auch mehrere Anwendungsformen genannt):
2,4-D, Acetochlor, Acifluorfen, Acifluorfen-sodium, Aclonifen, Alachlor, Alloxydim, Alloxydim-sodium, Ametryn, Amicarbazone, Amidosulfuron, Aminopyralid, Amitrole, Anilofos, Asulam, Atrazine, Azafenidin, Azimsulfuron, Beflubutamid, Benazolin, Benazolin-ethyl, Benfuresate, Bensulfuron-methyl, Bentazone, Benzfendizone, Benzobicyclon, Benzofenap, Bifenox, Bilanafos, Bispyribac-sodium, Bromacil, Bromobutide, Bromofenoxim, Bromoxynil, Butachlor, Butafenacil, Butenachlor, Butralin, Butroxydim, Butylate, Cafenstrole, Carbetamide, Carfentrazone-ethyl, Chlomethoxyfen, Chloridazon, Chlorimuron-ethyl, Chlornitrofen, Chlorotoluron, Chlorsulfuron, Cinidon-ethyl, Cinmethylin, Cinosulfuron, Clefoxydim, Clethodim, Clodinafop-propargyl, Clomazone, Clomeprop, Clopyralid, Cloransulam-methyl, Cumyluron, Cyanazine, Cyclosulfamuron, Cycloxydim, Cyhalofop-butyl, Desmedipham, Dicamba, Dichlobenil, Dichlorprop, Dichlorprop-P, Diclofop-methyl, Diclosulam, Difenzoquat, Diflufenican, Diflufenzopyr, Dikegulac-sodium, Dimefuron, Dimepiperate, Dimethachlor, Dimethametryn, Dimethenamid, Triaziflam, Diquatdibromide, Dithiopyr, Diuron, Dymron, EPTC, Esprocarb, Ethalfluralin, Ethametsulfuron-methyl, Ethofumesate, Ethoxyfen, Ethoxysulfuron, Etobenzanid, Fenoxaprop-ethyl, Fenoxaprop-P-ethyl, Fentrazamide, Flamprop-M-isopropyl, Flamprop-M-methyl, Flazasulfuron, Florasulam, Fluazifop, Fluazifop-butyl, Fluazifop-butyl, Fluazolate, Flucarbazone-sodium, Flucetosulfuron, Fluchloralin, Flufenacet, Flufenpyr, Flumetsulam, Flumiclorac-pentyl, Flumioxazin, Fluometuron, Fluorochloridone, Fluoroglycofen-ethyl, Flupoxam, Flupyrsulfuron-methyl-sodium, Fluridone, Fluroxypyr, Fluroxypyr-butoxypropyl, Fluroxypyr-meptyl, Flurprimidol, Flurtamone, Fluthiacet-methyl, Fomesafen, Foramsulfuron, Glufosinate, Glufosinateammonium, Glyphosate, Halosulfuron-methyl, Haloxyfop, Haloxyfop-ethoxyethyl, Haloxyfop-methyl, Haloxyfop-P-methyl, Hexazinone, Imazamethabenz-methyl, Imazamox, Imazapic, Imazapyr, Imazaquin, Imazethapyr, Imazosulfuron, Indanofan, Iodosulfuron-methyl-sodium, Ioxynil, Isoproturon, Isouron, Isoxaben, Isoxachlortole, Isoxaflutole, Ketospiradox, Lactofen, Lenacil, Linuron, MCPA, Mecoprop, Mecoprop-P, Mefenacet, Mesosulfuron-methyl, Mesotrione, Metamifop, Metamitron, Metazachlor, Methabenzthiazuron, Methyldymron, Metobromuron, Metolachlor, Metosulam, Metoxuron, Metribuzin, Metsulfuron-methyl, Molinate, Monolinuron, Naproanilide, Napropamide, Neburon, Nicosulfuron, Norflurazon, Orbencarb, Oryzalin, Oxadiargyl, Oxadiazon, Oxasulfuron, Oxaziclomefone, Oxyfluorfen, Paraquat, Pelargonic acid, Pendimethalin, Pendralin, Penoxsulam, Pentoxazone, Pethoxamid, Phenmedipham, Picloram, Picolinafen, Pinoxaden, Piperophos, Pretilachlor, Primisulfuron-methyl, Profluazol, Profoxydim, Prometryn, Propachlor, Propanil, Propaquizafop, Propisochlor, Propoxycarbazone-sodium, Propyzamide, Prosulfocarb, Prosulfuron, Pyraclonil, Pyraflufen-ethyl, Pyrazolate, Pyrazosulfuronethyl, Pyrazoxyfen, Pyribenzoxim, Pyributicarb, Pyridafol, Pyridate, Pyriftalid, Pyriminobac-methyl, Pyrithiobac-sodium, Quinclorac, Quinmerac, Quinoclamine, Quizalofop-ethyl, Quizalofop-P-ethyl, Quizalofop-P-tefuryl, Rimsulfuron, Sethoxydim, Simazine, Simetryn, S-Metolachlor, Sulcotrione, Sulfentrazone, Sulfometuronmethyl, Sulfosate, Sulfosulfuron, Tebuthiuron, Tepraloxydim, Terbuthylazine, Terbutryn, Thenylchlor, Thiazopyr, Thifensulfuron-methyl, Thiobencarb, Tiocarbazil, Tralkoxydim, Triallate, Triasulfuron, Tribenuron-methyl, Triclopyr, Tridiphane, Trifloxysulfuron, Trifluralin, Triflusulfuron-methyl undTritosulfuron.

Als Kombinationspartner kommen vorzugsweise Verbindungen in Frage, die selektiv in Soja sind, beispielsweise
(Ba) selektiv in Soja gegen monokotyle und dikotyle Schadpflanzen wirksame Herbizide, beispielsweise Trifluralin, Metribuzin, Clomazone, Pendimethalin, Metolachlor, Flumetsulam, Dimethenamid, Linuron, Ethalfluralin, Flufenacet, Norflurazon, Vernolate, Chlortoluron, Chlorotoluron, Cloransulam und Ester wie der Methylester, Imazethapyr, Imazamox, Imazaquin,
(Bb) selektiv in Soja gegen dikotyle Schadpflanzen wirksame Herbizide, beispielsweise Sulfentrazone, Bentazone, Thifensulfuron und dessen Ester, insbesondere der Methylester, Oxyfluorfen, Lactofen, Fomesafen, Flumiclorac und dessen Ester wie der Pentylester, Acifluorfen und dessen Natriumsalz, 2,4-DB und dessen Ester und Salze, Flumioxazin, Benazolin, 2,4-D und dessen Ester und Salze Chlorimuron und dessen Ester und Salze wie Chlorimuron-ethyl,
(Bc) selektiv in Soja gegen monokotyle Schadpflanzen wirksame Herbizide, beispielsweise Sethoxydim, Cycloxydim, Clethodim, Quizalofop-P und dessen Ester wie der Ethyl- oder Tefurylester, Fenoxaprop-P und dessen Ester wie der Ethylester, Fluazifop-P und dessen Ester wie der Butylester, Haloxyfop und Haloxyfop-P und deren Ester wie der Methyl- oder der -etotylester, Propaquizafop, Alachlor,
(Bd) nicht selektive, z.B. auch zu spezifischen Zwecken in Soja einsetzbare Herbizide, z. B. Glufosinate, Glyphosate, Paraquat (Salze) wie Paraquatdichlorid,

Ebenfalls bevorzugte Kombinationspartner sind Benozalin, Fenoxaprop, Lactofen, Chlortoluron, Flufenacet, Metribuzin, Benfuresate, Fentrazamid, Mefenacet, Diclofop, loxynil, Bromoxynil, Amidosulfuron, Flurtamone, Diflufenican, Ethoxysulfuron, Flucarbazone, Propoxycarbazone, Sulcotrione, Mesotrione, Isoproturon, Iodosulfuron, Mesosulfuron, Foramsulfuron, Anilofos, Oxaziclomefone, Oxadiargyl, Isoxaflutole, Linuron.

Auch Mischungen mit anderen bekannten Wirkstoffen, wie Fungiziden, Insektiziden, Akariziden, Nematiziden, Safenern, Schutzstoffen gegen Vogelfraß, Pflanzennährstoffen und Bodenstrukturverbesserungsmitteln sind möglich.

Die Wirkstoffe der Formel (I) und deren Salze können als solche, in Form ihrer Formulierungen oder den daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z.B. durch Gießen, Spritzen, Sprühen, Streuen.

Die vorliegende Erfindung betrifft weiterhin ein Verfahren zur Bekämpfung von unerwünschtem Pflanzenwachstum (z.B. zur selektiven Bekämpfung von Schadpflanzen in Leguminosen), wobei eine oder mehrere Verbindungen der Formel (I) und deren Salze auf die Pflanzen (z.B. Schadpflanzen wie mono- oder dikotyle Unkräuter oder unerwünschte Kulturpflanzen), das Saatgut (z.B. Körner, Samen oder vegetative Vermehrungsorgane wie Knollen oder Sprossteile mit Knospen) oder die Fläche auf der die Pflanzen wachsen (z.B. die Anbaufläche) appliziert werden. Sie können z.B. vor der Saat, sowie vor als auch nach dem Auflaufen der Pflanzen appliziert werden. Die Vorsaatapplikation kann z.B. durch Spritzen oder Einarbeitung in den Boden erfolgen. Auch Splitapplikationen z.B. im frühen Vorauflauf gefolgt von späterer Nachauflaufapplikation sind möglich. Bevorzugt ist eine Applikation auf die aufgelaufenen Schadpflanzen, insbesondere vor dem Auflaufen von (erwünschten) Kulturpflanzen wie Leguminosen.

Bevorzugt für die selektive Anwendung in Leguminosen ist eine Applikation auf aufgelaufene Pflanzen, insbesondere auf aufgelaufene Schadpflanzen (z.B. Unkräuter oder unerwünschte Kulturpflanzen), bevorzugt vor dem Auflaufen der Leguminosen.

Die angewandte Wirkstoffmenge kann in einem größeren Bereich schwanken. Sie hängt im wesentlichen von der Art des gewünschten Effektes ab. Im allgemeinen liegen die Aufwandmengen zwischen 0,01 g und 100 g Wirkstoff pro Hektar Bodenfläche. Für eine selektive Anwendung bevorzugt sind im allgemeinen niedrigere Aufwandmengen, z.B. im Bereich von 0,01 g bis 9 g Wirkstoff pro Hektar, vorzugsweise zwischen 0,1 g und 5 g pro Hektar, insbesondere in der Applikation auf aufgelaufene Pflanzen, insbesondere auf aufgelaufene Schadpflanzen (z.B. Unkräuter oder unerwünschte Kulturpflanzen).

Die Wirkstoffe der Formel (I) und deren Salze weisen eine ausgezeichnete Selektivität in Leguminosen auf, wobei überraschenderweise auch bei niedrigen Wirkstoffdosierungen eine hervorragende Wirkung gegen die in Leguminosen typisch auftretenden Schadpflanzen erhalten bleibt. Insbesondere werden in Kulturen von Leguminosen vorkommende, oft schwer bekämpfbare Schadpflanzen wie Spezies der Gattungen Amaranthus, Echinochloa, Sorghum, Ipomoea, Pharbitis, Solanum, Setaria, Brachiaria, Lolium, Euphorbia, Abutilon wirksam bekämpft.

### Biologische Beispiele

### 1. Unkrautwirkung im Vorauflauf

Samen bzw. Rhizomstücke von mono- und dikotylen Unkrautpflanzen wurden in Papptöpfen in sandiger Lehmerde ausgelegt und mit Erde abgedeckt. Die in Form von benetzbaren Pulvern oder Emulsionskonzentraten formulierten Verbindungen der Formel (I) oder deren Salze wurden dann als wäßrige Suspensionen bzw. Emulsionen mit einer Wasseraufwandmenge von umgerechnet 600 bis 800 I/ha in unterschiedlichen Dosierungen auf die Oberfläche der Abdeckerde appliziert.

Nach der Behandlung wurden die Töpfe im Gewächshaus aufgestellt und unter guten Wachstumsbedingungen für die Unkräuter gehalten. Die optische Bonitur der Pflanzen- bzw. Auflaufschäden erfolgte nach dem Auflaufen der Versuchspflanzen nach einer Versuchszeit von 3 bis 4 Wochen im Vergleich zu unbehandelten Kontrollen. Wie die Ergebnisse zeigen, weisen die getesteten Verbindungen eine gute herbizide Vorauflaufwirksamkeit gegen ein breites Spektrum von Ungräsem und Unkräutern auf. Beispielsweise haben die Verbindungen Nr. I-1, I-3, I-8, I-9, I-10, I-11, I-12, I-14, I-21, I-22, I-23, I-29, I-30, I-51, I-52, I-60, I-70, I-142, I-143, I-145 und andere Verbindungen aus Tabelle 1 sehr gute herbizide Wirkung gegen Schadpflanzen wie Sinapis alba, Chrysanthemum segetum, Avena sativa, Stellaria media, Echinochloa crus-galli, Lolium multiflorum, Setaria viridis, Abutilon theophrasti, Amaranthus retroflexus, Brachiaria plantaginea, Solanum nigrum, Euphorbia heterophylla, Sorghum halepense und Panicum miliaceum im Vorauflaufverfahren bei einer Aufwandmenge von 100 g und weniger Aktivsubstanz pro Hektar.

### 2. Unkrautwirkung im Nachauflauf

Samen bzw. Rhizomstücke von mono- und dikotylen Unkräutern wurden in Plastiktöpfen in sandigem Lehmboden ausgelegt, mit Erde abgedeckt und im Gewächshaus unter guten Wachstumsbedingungen angezogen. Drei Wochen nach der Aussaat wurden die Versuchspflanzen im Dreiblattstadium behandelt. Die als Spritzpulver bzw. als Emulsionskonzentrate formulierten Verbindungen der Formel (I) oder deren Salze wurden in verschiedenen Dosierungen mit einer Wasseraufwandmenge von umgerechnet 600 bis 800 I/ha auf die grünen Pflanzenteile gesprüht. Nach ca. 3 bis 4 Wochen Standzeit der Versuchspflanzen im Gewächshaus unter optimalen Wachstumsbedingungen wurde die Wirkung der Präparate optisch im Vergleich zu unbehandelten Kontrollen bonitiert. Die getesteten Verbindungen weisen auch im Nachauflauf eine gute herbizide Wirksamkeit gegen ein breites Spektrum wirtschaftlich wichtiger Ungräser und Unkräuter auf. Beispielsweise haben die Verbindungen Nr. I-1, I-3, I-8, I-9, I-10, I-11, I-12, I-14, I-21, I-22, I-23, I-29, I-30, I-51, I-52, I-60, I-70, I-142, I-143, I-145 und andere Verbindungen aus Tabelle 1 sehr gute herbizide Wirkung gegen Schadpflanzen wie Sinapis alba, Echinochloa crus-galli, Lolium multiflorum, Chrysanthemum segetum, Setaria viridis, Abutilon theophrasti, Amaranthus retroflexus, Panicum miliaceum, Brachiaria plantaginea, Solanum nigrum, Euphorbia heterophylla, Sorghum halepense und Avena sativa im Nachauflaufverfahren bei einer Aufwandmenge von 100 g und weniger Aktivsubstanz pro Hektar. Beispielsweise zeigt die Verbindung I-9 bei einer Aufwandmenge von 30 g Aktivsubstanz pro Hektar eine herbizide Wirkung von 100 % gegenüber Echinochloa crus galli, von 100 % gegenüber Brachiaria plantaginea, von 100 % gegenüber Setaria viridis, von 93 % Amaranthus retroflexus und von 100 % gegenüber Solanum nigrum.

### 3. Kulturpflanzenverträglichkeit

In weiteren Versuchen im Gewächshaus wurden Samen einer größeren Anzahl von Kulturpflanzen und Unkräutern in sandigem Lehmboden ausgelegt und mit Erde abgedeckt. Ein Teil der Töpfe wurde sofort wie unter Abschnitt 1 beschrieben behandelt, die übrigen im Gewächshaus aufgestellt, bis die Pflanzen zwei bis drei echte Blätter entwickelt haben und dann wie unter Abschnitt 2 beschrieben mit den Verbindungen der Formel (I) oder deren Salzen in unterschiedlichen Dosierungen besprüht. Vier bis fünf Wochen nach der Applikation und Standzeit im Gewächshaus wurde mittels optischer Bonitur festgestellt, daß die getesteten Verbindungen, beispielsweise die Verbindungen I-1, I-3, I-8, I-9, 1-10, I-11, I-12, I-14, I-21, I-22, I-23, I-29, I-30, I-51, I-52, I-60, I-70, I-142, I-143, I-145 und andere Verbindungen aus Tabelle 1 Leguminosen-Kulturen wie Soja im Vor- und Nachauflaufverfahren ungeschädigt ließen. Beispielsweise zeigt Verbindung 1-9 bei einer Aufwandmenge von 8 g Aktivsubstanz pro Hektar 0 % Schädigung an Soja (Glycine max.).

## Patentansprüche

1. Verwendung einer oder mehrerer Verbindungen der allgemeinen Formel (I) und deren Salzen zur selektiven Bekämpfung von unerwünschtem Pflanzenwachstum in Leguminosen 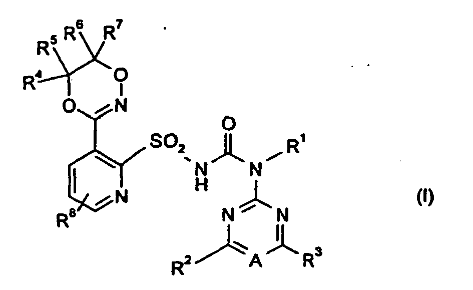 worin
A für Stickstoff oder eine CR¹¹-Gruppierung steht,
wobei
R¹¹ für Wasserstoff, Alkyl, Halogen und Haloalkyl steht,
R¹ für Wasserstoff oder einen gegebenenfalls substituierten Rest aus der Reihe Alkyl, Alkoxy, Alkoxyalkyl, Alkenyl Alkinyl, Cycloalkyl, Cycloalkylalkyl, Aralkyl und Aryl steht,
R² für Wasserstoff, Halogen oder für jeweils gegebenenfalls durch Halogen substituiertes Alkyl, Alkoxy, Alkylthio, Alkylamino oder Dialkylamino mit jeweils 1 bis 6 Kohlenstoffatomen steht,
R³ für Wasserstoff, Halogen oder für jeweils gegebenenfalls durch Halogen substituiertes Alkyl, Alkoxy, Alkylthio, Alkylamino oder Dialkylamino mit jeweils 1 bis 6 Kohlenstoffatomen steht,
R⁴-R⁷ unabhängig voneinander für Wasserstoff, Halogen, Cyano, Thiocyanato oder für jeweils gegebenenfalls durch Halogen substituiertes Alkyl, Alkoxy, Alkylthio, Alkylsulfinyl, Alkylsulfonyl, Alkylamino, Alkylcarbonyl, Alkoxycarbonyl, Alkylaminocarbonyl mit jeweils 1 bis 3 Kohlenstoffatomen stehen,
R⁸ für Wasserstoff, Halogen, Cyano, Thiocyanato oder für jeweils gegebenenfalls durch Halogen substituiertes Alkyl, Alkoxy, Alkylthio, Alkylsulfinyl, Alkylsulfonyl, Alkylamino, Alkylcarbonyl, Alkoxycarbonyl, Alkylaminocarbonyl mit jeweils 1 bis 3 Kohlenstoffatomen steht,
wobei in den vorgenannten Resten die Alkyl- und Alkylengruppen jeweils 1 bis 6 C-Atome, die Alkenyl- und Alkinylgruppen jeweils 2 bis 6 C-Atome, die Cycloalkylgruppen jeweils 3 bis 6 C-Atome und die Arylgruppen jeweils 6 bzw. 10 C-Atome enthalten können.

2. Verwendung gemäß Anspruch 1, wobei in Formel (I)
A für Stickstoff oder eine CH-Gruppierung steht,
R¹ für Wasserstoff oder einen gegebenenfalls durch Halogen substituierten Rest aus der Reihe Alkyl, Alkoxy, Alkoxyalkyl, Alkenyl und Alkinyl mit jeweils bis zu 3 Kohlenstoffatomen steht,
R² für Wasserstoff, Halogen oder für jeweils gegebenenfalls durch Halogen substituiertes Alkyl, Alkoxy, Alkylthio, Alkylamino oder Dialkylamino mit jeweils 1 bis 3 Kohlenstoffatomen in den Alkylresten steht,
R³ für Wasserstoff, Halogen oder für jeweils gegebenenfalls durch Halogen substituiertes Alkyl, Alkoxy, Alkylthio, Alkylamino oder Dialkylamino mit jeweils 1 bis 3 Kohlenstoffatomen in den Alkylresten steht,
R⁴-R⁷ unabhängig voneinander für Wasserstoff, Halogen, Cyano, Thiocyanato oder für jeweils gegebenenfalls durch Halogen substituiertes Alkyl, Alkoxy, Alkylthio, Alkylsulfinyl, Alkylsulfonyl, Alkylamino, Alkylcarbonyl, Alkoxycarbonyl oder Alkylaminocarbonyl mit jeweils 1 bis 3 Kohlenstoffatomen in den Alkylresten steht,
R⁸ für Wasserstoff, Halogen, Cyano, Thiocyanato oder für jeweils gegebenenfalls durch Halogen substituiertes Alkyl, Alkoxy, Alkylthio, Alkylsutfinyl, Alkylsulfonyl, Alkylamino, Alkylcarbonyl, Alkoxycarbonyl oder Alkylaminocarbonyl mit jeweils 1 bis 3 Kohlenstoffatomen in den Alkylresten steht.

3. Verwendung gemäß Anspruch 1, wobei in Formen (I)
A für Stickstoff oder eine CH-Gruppierung steht,
R¹ für Wasserstoff, Methyl, Ethyl, Methoxy, Methoxymethyl oder Ethoxy steht,
R² für Wasserstoff, Chlor, Methyl, Ethyl, Trifluoromethyl, Methoxy, Ethoxy, Difluoromethoxy, Methylthio, Methylamino oder Dimethylamino steht,
R³ für Wasserstoff, Chlor, Methyl, Ethyl, Trifluoromethyl, Methoxy, Ethoxy, Difluoromethoxy, Methylthio, Methylamino oder Dimethylamino steht,
R⁴ - R⁷ unabhängig voneinander für Wasserstoff, Fluor, Chlor, Cyano, oder für jeweils gegebenenfalls durch Chlor oder Fluor substituiertes Methyl, Methylthio, Methylsulfinyl, Methylsulfonyl, Methoxycarbonyl und Ethoxycarbonyl steht,
R⁸ für Wasserstoff, Fluor, Chlor, Brom, Cyano oder für jeweils gegebenenfalls durch Chlor oder Fluor substituiertes Methyl, Methoxy, Ethoxy, Methylthio, Ethylthio, Methylsulfinyl, Ethylsulfinyl, Methylsulfonyl, Ethylsulfonyl, Methyl- oder Dimethylamino steht.

4. Verwendung gemäß einem oder mehreren der Ansprüche 1 - 3 worin die Leguminosen ausgewählt sind aus den Gattungen Glycine, Phaseolus, Pisum, Vicia und Arachis.

5. Verwendung gemäß einem oder mehreren der Ansprüche 1 - 4, zur Bekämpfung von Unkräutern und unerwünschten Kulturpflanzen.

6. Verfahren zur selektiven Bekämpfung von unerwünschtem Pflanzenwachstum in Leguminosen, wobei eine oder mehrere Verbindungen der Formel (I) und deren Salze, wie in einem oder mehreren der Ansprüche 1 - 3 definiert, auf die Pflanzen, das Saatgut oder die Fläche auf der die Pflanzen wachsen appliziert werden.

7. Verfahren gemäß Anspruch 6, worin die Leguminosen ausgewählt sind aus den Gattungen Glycine, Phaseolus, Pisum, Vicia und Arachis.

8. Verfahren gemäß Anspruch 6 oder 7, worin die unerwünschten Pflanzen Unkräuter oder unerwünschte Kulturpflanzen sind.

9. Verfahren gemäß einem oder mehreren der Ansprüche 6-8, worin die Verbindungen der Formel (I) und deren Salze auf die aufgelaufenen Schadpflanzen appliziert werden.

## Claims

1. The use of one or more compounds of the formula (I) and salts thereof for the selective control of unwanted vegetation in leguminous plants 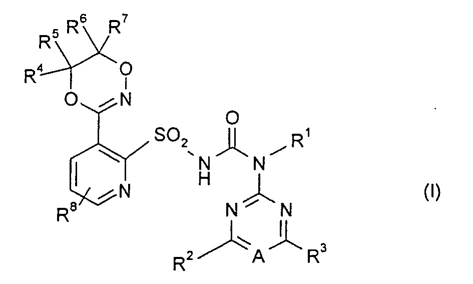 in which
A is nitrogen or a CR¹¹ grouping,
where
R¹¹ is hydrogen, alkyl, halogen or haloalkyl,
R¹ is hydrogen or an optionally substituted radical from the group consisting of alkyl, alkoxy, alkoxyalkyl, alkenyl, alkynyl, cycloalkyl, cycloalkylalkyl, aralkyl and aryl,
R² is hydrogen, halogen or is in each case optionally halogen-substituted alkyl, alkoxy, alkylthio, alkylamino or dialkylamino having in each case 1 to 6 carbon atoms,
R³ is hydrogen, halogen or is in each case optionally halogen-substituted alkyl, alkoxy, alkylthio, alkylamino or dialkylamino having in each case 1 to 6 carbon atoms,
R⁴-R⁷ independently of one another are hydrogen, halogen, cyano, thiocyanato or are in each case optionally halogen-substituted alkyl, alkoxy, alkylthio, alkylsulfinyl, alkylsulfonyl, alkylamino, alkylcarbonyl, alkoxycarbonyl, alkylaminocarbonyl having in each case 1 to 3 carbon atoms,
R⁸ is hydrogen, halogen, cyano, thiocyanato or is in each case optionally halogen-substituted alkyl, alkoxy, alkylthio, alkylsulfinyl, alkylsulfonyl, alkylamino, alkylcarbonyl, alkoxycarbonyl, alkylaminocarbonyl having in each case 1 to 3 carbon atoms,
where in the radicals mentioned above the alkyl and alkylene groups may each contain 1 to 6 carbon atoms, the alkenyl and alkynyl groups may each contain 2 to 6 carbon atoms, the cycloalkyl groups may each contain 3 to 6 carbon atoms and the aryl groups may each contain 6 or 10 carbon atoms.

2. The use according to claim 1, where in formula (I)
A is nitrogen or a CH grouping,
R¹ is hydrogen or an optionally halogen-substituted radical from the group consisting of alkyl, alkoxy, alkoxyalkyl, alkenyl and alkynyl having in each case up to 3 carbon atoms,
R² is hydrogen, halogen or in each case optionally halogen-substituted alkyl, alkoxy, alkylthio, alkylamino or dialkylamino having in each case 1 to 3 carbon atoms in the alkyl radicals,
R³ is hydrogen, halogen or in each case optionally halogen-substituted alkyl, alkoxy, alkylthio, alkylamino or dialkylamino having in each case 1 to 3 carbon atoms in the alkyl radicals,
R⁴-R⁷ independently of one another are hydrogen, halogen, cyano, thiocyanato or are in each case optionally halogen-substituted alkyl, alkoxy, alkylthio, alkylsulfinyl, alkylsulfonyl, alkylamino, alkylcarbonyl, alkoxycarbonyl or alkylaminocarbonyl having in each case 1 to 3 carbon atoms in the alkyl radicals,
R⁸ is hydrogen, halogen, cyano, thiocyanato or is in each case optionally halogen-substituted alkyl, alkoxy, alkylthio, alkylsulfinyl, alkylsulfonyl, alkylamino, alkylcarbonyl, alkoxycarbonyl or alkylaminocarbonyl having in each case 1 to 3 carbon atoms in the alkyl radicals.

3. The use according to claim 1, where in formula (I)
A is nitrogen or a CH grouping,
R¹ is hydrogen, methyl, ethyl, methoxy, methoxymethyl or ethoxy,
R² is hydrogen, chlorine, methyl, ethyl, trifluoromethyl, methoxy, ethoxy, difluoromethoxy, methylthio, methylamino or dimethylamino,
R³ is hydrogen, chlorine, methyl, ethyl, trifluoromethyl, methoxy, ethoxy, difluoromethoxy, methylthio, methylamino or dimethylamino,
R⁴-R⁷ independently of one another are hydrogen, fluorine, chlorine, cyano, or are in each case optionally chlorine- or fluorine-substituted methyl, methylthio, methylsulfinyl, methylsulfonyl, methoxycarbonyl or ethoxycarbonyl,
R⁸ is hydrogen, fluorine, chlorine, bromine, cyano or is in each case optionally chlorine-or fluorine-substituted methyl, methoxy, ethoxy, methylthio, ethylthio, methylsulfinyl, ethylsulfinyl, methylsulfonyl, ethylsulfonyl, methyl- or dimethylamino.

4. The use according to one or more of claims 1-3, where the leguminous plants are selected from the genera Glycine, Phaseolus, Pisum, Vicia and. Arachis.

5. The use according to one or more of claims 1-4 for controlling weeds and unwanted crop plants.

6. A method for the selective control of unwanted vegetation in leguminous plants, which method comprises applying one or more compounds of the formula (I) or salts thereof as defined in one or more of claims 1-3 to the plants, the plant seed or the area in which the plants grow.

7. The method according to claim 6, where the leguminous plants are selected from the genera Glycine, Phaseolus, Pisum, Vicia and Arachis.

8. The method according to claim 6 or 7, where the unwanted plants are weeds or unwanted crop plants.

9. The method according to one or more of claims 6-8 where the compounds of the formula (I) and their salts are applied to the emerged harmful plants.

## Revendications

1. Utilisation d'un ou plusieurs composés de formule générale (I) et de leurs sels pour lutter sélectivement contre la croissance de plantes indésirables dans les cultures de légumineuses 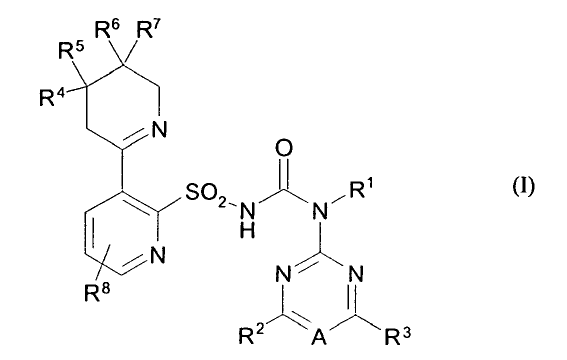 dans laquelle
A représente l'azote ou un groupe CR¹¹, où R¹¹ représente l'hydrogène, un alkyle, un halogène ou un haloalkyle ;
R¹ représente l'hydrogène ou un reste le cas échéant substitué de la série alkyle, alcoxy, alcoxyalkyle, alcényle, alcynyle, cycloalkyle, cycloalkylalkyle, aralkyle et aryle ;
R² représente l'hydrogène, un halogène ou un reste alkyle, alcoxy, alkylthio, alkylamino ou dialkylamino contenant chacun de 1 à 6 atomes de carbone et respectivement substitués le cas échéant par un halogène ;
R³ représente l'hydrogène, un halogène ou un reste alkyle, alcoxy, alkylthio, alkylamino ou dialkylamino contenant chacun de 1 à 6 atomes de carbone et respectivement substitués le cas échéant par un halogène ;
R⁴ à R⁷ représentent indépendamment les uns des autres l'hydrogène, un halogène, un groupe cyano, thiocyanato ou un reste alkyle, alcoxy, alkylthio, alkylsulfinyle, alkylsulfonyle, alkylamino, alkylcarbonyle, alcoxycarbonyle, alkylaminocarbonyle contenant chacun de 1 à 3 atomes de carbone et respectivement substitués le cas échéant par un halogène ;
R⁸ représente l'hydrogène, un halogène, un groupe cyano, thiocyanato ou un reste alkyle, alcoxy, alkylthio, alkylsulfinyle, alkylsulfonyle, alkylamino, alkylcarbonyle, alcoxycarbonyle, alkylaminocarbonyle contenant chacun de 1 à 3 atomes de carbone et respectivement substitués le cas échéant par un halogène ;
et, dans les restes précités, les groupes alkyle et alkylène peuvent contenir de 1 à 6 atomes de carbone chacun, les groupes alcényle et alcynyle de 2 à 6 atomes de carbone chacun, les groupes cycloalkyle de 3 à 6 atomes de carbone chacun et les groupes aryle 6 ou 10 atomes de carbone chacun.

2. Utilisation selon la revendication 1, dans laquelle, dans la formule (I),
A représente l'azote ou un groupe CH,
R¹ représente l'hydrogène ou un reste de la série alkyle, alcoxy, alcoxyalkyle, alcényle et alcynyle contenant chacun jusqu'à 3 atomes de carbone et le cas échant substitué par un halogène ;
R² représente l'hydrogène, un halogène ou un reste alkyle, alcoxy, alkylthio, alkylamino ou dialkylamino contenant chacun de 1 à 3 atomes de carbone dans les restes alkyle et respectivement substitués le cas échéant par un halogène ;
R³ représente l'hydrogène, un halogène ou un reste alkyle, alcoxy, alkylthio, alkylamino ou dialkylamino contenant chacun de 1 à 3 atomes de carbone dans les restes alkyle et respectivement substitués le cas échéant par un halogène ;
R⁴ à R⁷ représentent indépendamment les uns des autres l'hydrogène, un halogène, un groupe cyano, thiocyanato ou un reste alkyle, alcoxy, alkylthio, alkylsulfinyle, alkylsulfonyle, alkylamino, alkylcarbonyle, alcoxycarbonyle ou alkylaminocarbonyle contenant chacun de 1 à 3 atomes de carbone dans les restes alkyle et respectivement substitués le cas échéant par un halogène ;
R⁸ représente l'hydrogène, un halogène, un groupe cyano, thiocyanato ou un reste alkyle, alcoxy, alkylthio, alkylsulfinyle, alkylsulfonyle, alkylamino, alkylcarbonyle, alcoxycarbonyle ou alkylaminocarbonyle contenant chacun de 1 à 3 atomes de carbone dans les restes alkyle et respectivement substitués le cas échéant par un halogène.

3. Utilisation selon la revendication 1, dans laquelle, dans la formule (I),
A représente l'azote ou un groupe CH ;
R¹ représente l'hydrogène, un groupe méthyle, éthyle, méthoxy, méthoxyméthyle ou éthoxy ;
R² représente l'hydrogène, le chlore, un groupe méthyle, éthyle, trifluorométhyle, méthoxy, éthoxy, difluorométhoxy, méthylthio, méthylamino ou diméthylamino ;
R³ représente l'hydrogène, le chlore, un groupe méthyle, éthyle, trifluorométhyle, méthoxy, éthoxy, difluorométhoxy, méthylthio, méthylamino ou diméthylamino,
R⁴ à R⁷ représentent indépendamment les uns des autres l'hydrogène, le fluor, le chlore, un groupe cyano ou un groupe méthyle, méthylthio, méthylsulfinyle, méthylsulfonyle, méthoxycarbonyle et éthoxycarbonyle respectivement substitués le cas échéant par le chlore ou le fluor ;
R⁸ représente l'hydrogène, le fluor, le chlore, le brome, un groupe cyano ou un groupe méthyle, méthoxy, éthoxy, méthylthio, éthylthio, méthylsulfinyle, éthylsulfinyle, méthylsulfonyle, éthylsulfonyle, méthylamino ou diméthylamino respectivement substitués le cas échéant par le chlore ou le fluor.

4. Utilisation selon une ou plusieurs des revendications 1 à 3, dans laquelle les légumineuses sont choisies parmi les genres *Glycine, Phaseolus, Pisum, Vicia* et *Arachis.*

5. Utilisation selon une ou plusieurs des revendications 1 à 4 pour lutter contre les adventices et les plantes cultivées indésirables.

6. Procédé de lutte sélective contre la croissance de plantes indésirables dans les cultures de légumineuses, dans lequel un ou plusieurs composés de formule (I) et leurs sels tels que définis dans une ou plusieurs des revendications 1 à 3 sont appliqués sur les plantes, sur les semences ou sur la surface sur laquelle les plantes croissent.

7. Procédé selon la revendication 6, dans lequel les légumineuses sont choisies parmi les genres *Glycine, Phaseolus, Pisum, Vicia* et *Arachis.*

8. Procédé selon la revendication 6 ou la revendication 7, dans lequel les plantes indésirables sont des adventices ou des plantes cultivées indésirables.

9. Procédé selon une ou plusieurs des revendications 6 à 8, dans lequel les composés de formule (I) et leurs sels sont appliqués sur les plantes nuisibles levées.
